Europäisches Patentamt

European Patent Office

Office européen des brevets

(11) Publication number: **0 257 489**
**A1**

# EUROPEAN PATENT APPLICATION

(21) Application number: **87111828.7**

(22) Date of filing: **14.08.87**

(51) Int. Cl.⁴: **G02F 1/33** , **G10K 15/00** ,
**H01J 37/30** , **G02B 6/12**

(30) Priority: **15.08.86 JP 191854/86**
**15.08.86 JP 191860/86**
**15.08.86 JP 191861/86**

(43) Date of publication of application:
**02.03.88 Bulletin 88/09**

(84) Designated Contracting States:
**DE FR GB**

(71) Applicant: **CANON KABUSHIKI KAISHA**
**30-2, 3-chome, Shimomaruko**
**Ohta-ku Tokyo(JP)**

(72) Inventor: **Nakamura, Kenji**
**404, Lions-Mansion, 1176-1 Tsurumaki**
**Hadano-shi Kanagawa-ken(JP)**
Inventor: **Kan, Fumitaka**
**28-25, Haginaka 3-chome**
**Ohta-ku Tokyo(JP)**
Inventor: **Hayakawa, Naoji**
**A-404, Highness-Aobadai 25-9 Sakuradai**
**Midori-ku Yokohama-shi Kanagawa-ken(JP)**
Inventor: **Takenouchi, Masanori**
**A-202, Corp-Irisawa 4-8, Tamura-cho**
**Atsugi-shi Kanagawa-ken(JP)**
Inventor: **Shimoda, Isamu**
**93-1, Tatsunodai**
**Zama-shi Kanagawa-ken(JP)**
Inventor: **Okunuki, Masahiko**
**182-8, Takao Itsukaichi-cho**
**Tama-gun Tokyo(JP)**

(74) Representative: **Grupe, Peter, Dipl.-Ing. et al**
**Patentanwaltsbüro**
**Tiedtke-Bühling-Kinne-Grupe-Pellmann-Gra-**
**ms-Struif-Winter-Roth Bavariaring 4**
**D-8000 München 2(DE)**

(54) **Method for generating a sound wave by utilizing electron rays etc., and optical device for controlling a light by an elastic wave generated by said method.**

(57) The method comprises steps of preparing a substrate (SUB) capable of transmitting the ultrasonic wave (APW) and periodically irradiating a plurality of radiation energies such as electron beams (CEB) to the substrate (SUB), wherein the propagation direction of the ultrasonic wave (APW) can be changed by individually controlling the irradiation of the radiation energies to the substrate (SUB) and the ultrasonic wave (APW) of a desired frequency can be generated by controlling the irradiation timing. Also the optical device comprises an optical medium where light and sound wave are propagated, means for supplying a plurality of radiation energies such as electron beams (CEB) and control means (VAC) for individually controlling irradiation of the radiation energies to the optical medium so that a desired elastic wave (APW) is generated in the optical medium to deflect the light propagating in the optical member, wherein the elastic wave (APW) acts as diffraction grating. Accordingly, the propagation direction of the elastic wave in the optical medium can be changed and the elastic wave can be split into a plurality of lights of different propagation directions and modulated in various ways, by changing the mode of the diffraction grating.

# FIG.7

## METHOD FOR GENERATING A SOUND WAVE BY UTILIZING ELECTRON RAYS ETC., AND OPTICAL DEVICE FOR CONTROLLING A LIGHT BY AN ELASTIC WAVE GENERATED BY SAID METHOD

### BACKGROUNDS OF THE INVENTION

The present invention relates to a method for generating a sound wave by using plural electron rays, etc., and more particularly to a method for generating an ultrasonic wave of a desired mode.

The present invention also relates to an optical device for controlling light deflection by an elastic wave such as elastic surface wave or volume wave (bulk type elastic wave) generated by such electron waves.

In the fields of light deflection and non-destructive probe, a method for utilizing an ultrasonic wave such as elastic surface wave or volume wave (bulk wave) generated in or on a surface of a solid has been studied and put into practice. Figs. I and 2 illustrate a conventional method for generating the volume wave and elastic surface wave. General functions of the volume wave and elastic surface wave are explained with reference to Figs. I and 2.

Device and method shown in Fig. I are usually used to generate the volume wave. Electrodes DI and D2 are arranged on a substrate S in which an ultrasonic wave is to be generated to hold a piezoelectric material P therebetween, and a high frequency signal source SG is connected across the electrodes DI and D2. A high frequency signal generated by the high frequency signal source SG is applied across the electrodes DI and D2, and an electrical signal is converted to a mechanical vibration in the piezoelectric material in accordance with the piezoelectricity so that an ultrasonic wave is generated. The ultrasonic wave is transmitted to the substrate S to produce a volume plane wave APW which propagates in the substrate S in a direction DP normal to the surface of the substrate S.

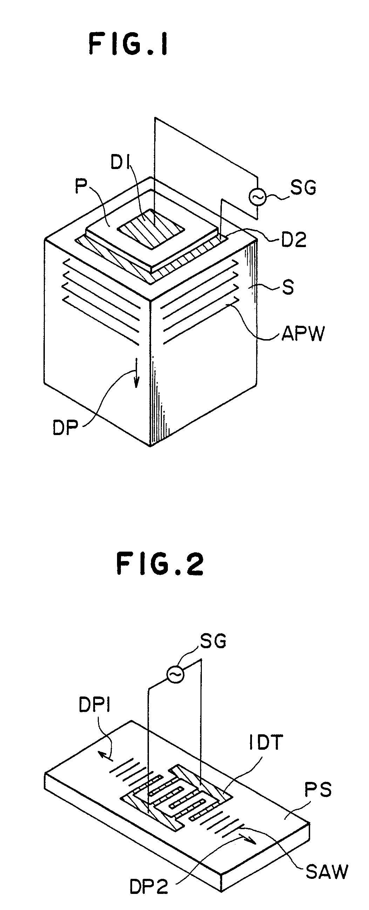

On the other hand, in order to generate an elastic surface wave, interdigital electrodes IDT are arranged on a piezoelectric substrate PS as shown in Fig. 2, and means for connecting the high frequency signal source SG to the interdigital electrodes IDT is usually used. The high frequency signal applied from the high frequency signal source SG to the interdigital electrodes IDT is converted to an elastic surface wave SAW by the piezoelectricity of the substrate PS and it is propagated in two directions, DPI and DP2.

The conventional method for generating the ultrasonic wave such as volume wave or elastic surface wave has the following disadvantages.

I. The piezoelectric material is essential because the electric signal is converted to the ultrasonic wave by using the piezoelectricity. In the elastic surface wave, it is difficult to propagate the elastic surface wave to other substrate without loss of energy. Accordingly, it is almost impossible to efficiently excite the elastic surface wave on a non-piezoelectric substrate.

II. Since a transducer which converts the electrical signal to the ultrasonic wave has a signal pass frequency band fixed depending on its shape, a bandwidth of ultrasonic wave which can be excited by one transduce is not wide.

III. Since the direction of propagation of the ultrasonic wave is uniquely determined by the shape of the transducer, excitation in any direction is not attainable.

IV. Since the transducers for the volume wave and elastic surface wave are totally different in shape, it is impossible to excite both waves by one transducer.

A prior art optical system which deflects a light by using the elastic surface wave shown in Fig. I and the volume wave shown in Fig. 2 is explained.

The elastic wave light deflector is an acoustic optical element which utilizes technology to deflect a light flux propagating in an electronic optical crystal or a thin film optical wave guide by an elastic wave generated in the crystal or optical wave guide. The importance thereof is more and more increasing as the light control element.

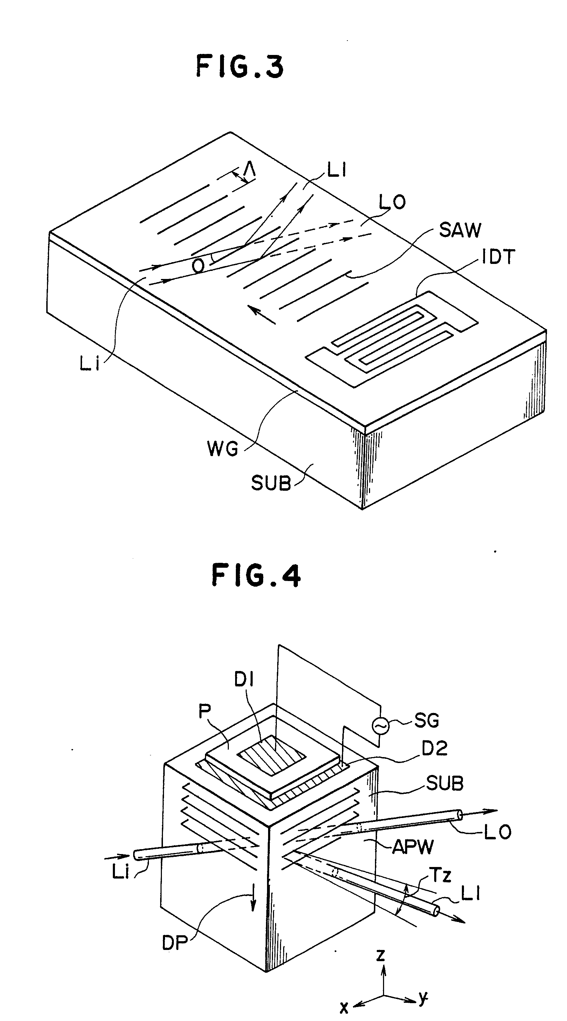

Fig. 3 shows a conventional elastic surface wave light deflector. A thin film optical wave guide WG is arranged on an optical wave guide substrate SUB, and interdigital electrodes IDT for exciting an elastic surface wave are arranged on the thin film optical wave guide WG. The substrate SUB may be a piezoelectric single crystal such as $LiNbO_3$, and the thin film optical wave guide WG may be a thin film of several $\mu m$ in thickness formed by vapor depositing Ti on a surface of the piezoelectric single crystal and thermal-diffusing it and having a higher refractive index than that of the substrate SUB. The substrate SUB may also be a non-piezoelectric single crystal such as Si. In this case, the thin film optical wave guide WG may be formed by depositing a piezoelectric material such as ZnO on the Si non-piezoelectric single crystal. ZnO is used in a form of thin film having a higher refractive index than that of the substrate SUB. The interdigital electrodes IDT for exciting the elastic surface wave may be formed by conductive material such as $A\ell$ deposited in interdigital pattern.

The elastic surface wave SAW is excited by the interdigital electrodes IDT, and a laser beam Li which propagates in the thin film optical wave guide WG crosses a wavefront of the elastic surface SAW with an angle $\theta$.

When a relationship of

$$\theta = \sin^{-1}(\lambda/2\Lambda)$$

where $\Lambda$ is a wavelength of the elastic surface wave and $\lambda$ is a wavelength of the laser beam Li, is met, the laser beam Li is Brag-diffracted by the elastic surface wave SAW and a portion thereof is converted to a diffraction light LI which propagates in the optical wave guide WG and the remainder is converted to a non-diffraction light L0 which propagates in the optical wave guide WG.

Since the wavefront of the elastic surface wave SAW acts as a diffraction grating, a direction of exit of the diffraction light LI may be changed by changing the wavelength $\lambda$ of the elastic surface wave SAW. Since the elastic surface wave SAW is usually excited by externally applying a high frequency signal to the interdigital electrodes IDT, the direction of exit of the diffraction light LI can be changed by changing the frequency of the high frequency signal.

In the prior art light deflector which uses the elastic surface wave, the elastic surface wave is excited by the interdigital electrodes IDT. Accordingly, it has the following disadvantages.

I. The interdigital electrode has a limitation on an operable frequency range depending on its shape and hence the wavelength of the elastic surface wave generated is limited and the deflection angle range is narrow.

II. Since the wavefront of the elastic surface wave generated is limited to be parallel to the interdigital electrodes IOT. the angle between the incident laser beam Li and the surface wave SAW is constant as seen from Fig. 3. Accordingly, the frequency which fully meets the Bragg's condition is only at one point, and at other frequency, the diffraction efficiency is lowered due to the deviation from the Bragg's condition even if the frequency is within the operable range of the interdigital electrodes IDT.

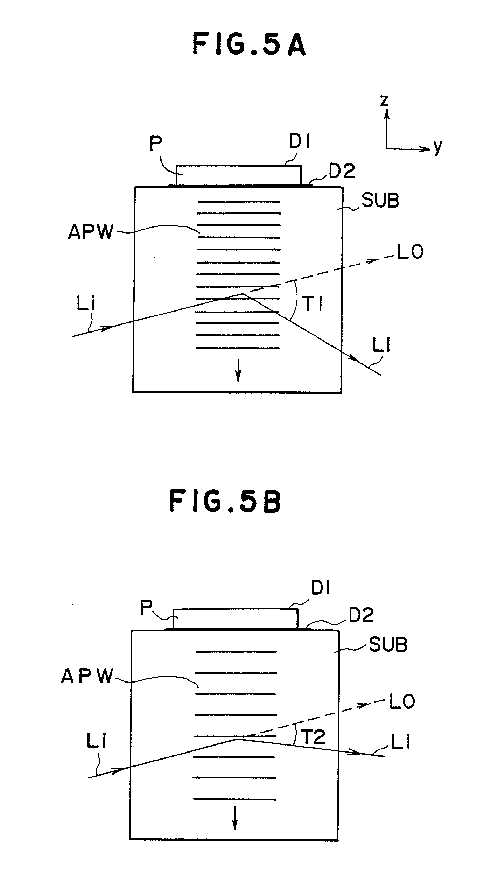

Fig. 4 shows a conventional volume wave light deflector and Figs. 5A and 5B illustrate its operation. In Fig. 4, electrodes DI and D2 are arranged on a substrate SUB having an acousto-optic effect to hold a piezoelectric material P therebetween, and a high frequency signal source SG is connected to the electrodes DI and D2. The high frequency signal generated by the high frequency signal source SG is applied across the electrodes DI and D2 and the electrical signal is converted to a mechanical vibration in the piezoelectric material P by its piezoelectricity so that an ultrasonic wave is generated. The ultrasonic wave is transmitted into the substrate SUB in which it is converted to a plane wave APW of a volume wave (bulk wave) which propagates in the medium SUB normally to the surface thereof. The wavefront of the ultrasonic wave thus generated functions as a diffraction grating to an incident light Li to cause a Bragg diffraction. As a result, a portion of the incident light Li becomes a diffraction light LI and the remainder becomes a non-diffraction light L0 which exits from the substrate SUB.

A spacing between the Bragg diffraction grating, that is, a wavelength of the ultrasonic wave which propagates in the substrate SUB is determined by the frequency of the high frequency signal applied to the electrodes DI and D2. Accordingly, by changing the frequency of the signal generated by the high frequency signal source SG, the diffraction angle of the diffraction light LI changes so that the diffraction light LI is swung toward the Z direction as shown by Tz.

Figs. 5A and 5B show sectional views of the device of Fig. 4 to illustrate the change of the diffraction angle. In Fig. 5A, the electrodes DI and D2 are driven at a higher frequency and the diffraction light LI is diffracted at an angle TI (diffraction angle) to the non-diffraction light L0. In Fig. 5B, the electrodes DI and D2 are driven at a lower frequency and the diffraction angle is T2 (TI > T2).

Since such a conventional volume wave light diflector uses the ultrasonic wave transducer having the piezoelectric member P to generate the ultrasonic wave, it has the following disadvantages.

I. Since the transducer has a limitation on the operable frequency range depending on its shape, the wavelength of the ultrasonic wave generated is limited and the range of deflection angle is narrow.

II. Since the wavefront of the generated ultrasonic wave is limited to be parallel to the transducer, the angle between the incident light and the wavefront is constant as seen from Figs. 5A and 5B. Accordingly, a frequency which fully meets the Bragg's condition is only at one point, and the diffraction efficiency at other frequency is lowered due to the deviation from the Bragg's condition even if the frequency is within the operable range of the ultrasonic wave transducer.

As described above, the prior art methods for generating the ultrasonic wave and elastic wave light deflectors have various problems.

## SUMMARY OF THE INVENTION

It is an object of the present invention to provide a novel method for generating an ultrasonic wave of a desired frequency.

It is another object of the present invention to provide a method for generating an ultrasonic wave of wide band and variable propagation direction.

It is other object of the present invention to provide an optical device capable of efficiently deflecting a light to a desired direction.

In order to achieve the above objects, the method for generating the ultrasonic wave in accordance with the present invention comprises steps of preparing a substrate capable of transmitting the ultrasonic wave and periodically irradiating a plurality of radiation energies such as electron beams to the substrate.

In accordance with the present invention, the propagation direction of the ultrasonic wave can be changed by individually controlling the irradiation of the radiation energies such as electron beams to the substrate. The ultrasonic wave of a desired frequency can be generated by controlling the irradiation timing.

The optical device of the present invention comprises an optical medium in which light and sound wave are propagated, means for supplying a plurality of radiation energies such as electron beams and control means for individually controlling irradiation of the radiation energies such as electron beams to the optical medium so that a desired elastic wave is generated in the optical medium to deflect the light propagating in the optical medium.

The elastic wave may be bulk wave or elastic surface wave. Such a static or propagating elastic wave functions as a diffraction grating to a light.

The present optical device can change a mode of the diffraction grating, for example, the number of waves or direction of array of grating by the control means. As a result, the direction of propagation of the elastic wave in the optical medium may be changed, or such elastic wave may be split into a plurality of lights of different propagation directions or modulated in various ways.

In the present method for generating the ultrasonic wave, the radiation energies are converted to thermal energies by which thermal waves are generated in the optical medium so that the thermal waves generate the elastic wave or acoustic wave. Laser beams may be used in place of electron beams to generate the thermal waves, although the embodiment hereinafter described uses the electron beams.

## BRIEF DESCRIPTION OF THE DRAWINGS

Fig. 1 shows a prior art bulk wave generator to illustrate a method for generating the bulk wave,

Fig. 2 shows a prior art elastic surface wave generator to illustrate a method for generating the elastic surface wave,

Fig. 3 shows a conventional elastic surface wave light deflector,

Fig. 4 shows a conventional bulk wave light deflector,

Figs. 5A and 5B show sectional views of deflector shown in Fig. 4,

Fig. 6 shows an acoustic wave generator to attain a method for generating an acoustic wave in accordance with the present invention,

Fig. 7 illustrates an operation of the generator shown in Fig. 6,

Fig. 8 illustrates another operation of the generator shown in Fig. 6,

Figs. 9A and 9B show relationships between a delay time of electron beam radiation and a direction of propagation of a plane wave in a substrate when a plurality of electron beams are irradiated,

Fig. 10 shows a diagramatic plan view of an electron beam generator,

Fig. 11 illustrates a method for matrix-driving a plurality of electron beam sources,

Fig. 12 shows an embodiment of an acoustic wave generator which uses the present method,

Fig. 13 shows an embodiment of an elastic surface wave light deflector of the present optical device,

Fig. 14 shows an ultrasonic wave transducer which uses an electron beam generator,

Figs. 15A and 15B illustrate an operation of the ultrasonic wave transducer shown in Fig. 14,

Figs. 16A and 16B show a sectional view of the substrate shown in Fig. 13 taken along a plane containing a normal line to the substrate surface and the direction of propagation of the elastic surface wave, and a timing chart for the irradiation of electron beams applied to different points on the substrate,

Fig. 17 shows a diagramatic plan view of an electron beam generator of the ultrasonic wave transducer shown in Fig. 14,

Figs. 18A and 18B illustrate the deflection of a laser beam by the elastic surface wave in the optical device shown in Fig. 13,

Fig. 19 shows an embodiment of a bulk wave light deflector of the optical device of the present invention,

Fig. 20 shows an ultrasonic wave transducer used in the device of Fig. 19,

Figs. 2IA and 2IB illustrate one-dimension deflection of a laser beam by a bulk wave in the optical device shown in Fig. I9,

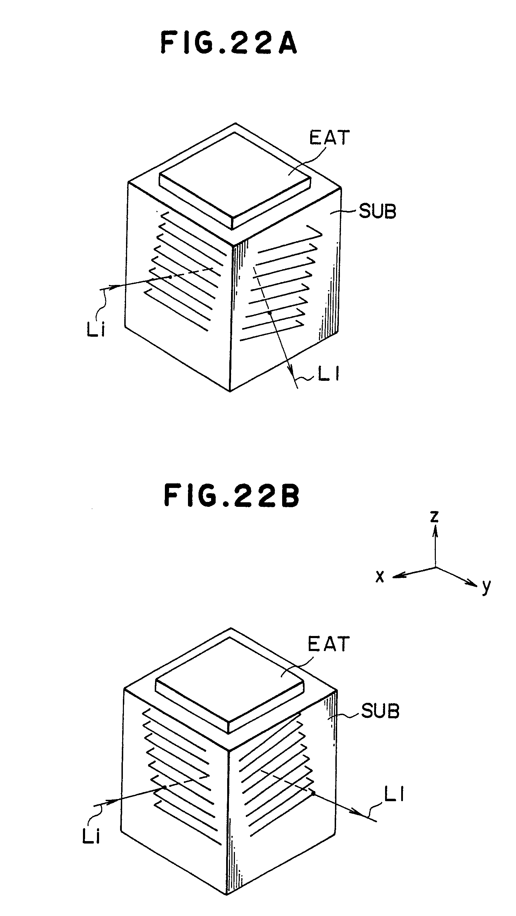

Figs. 22A and 22B illustrate two-dimension deflection of a laser beam by a bulk wave in the optical device shown in Fig. I9, and

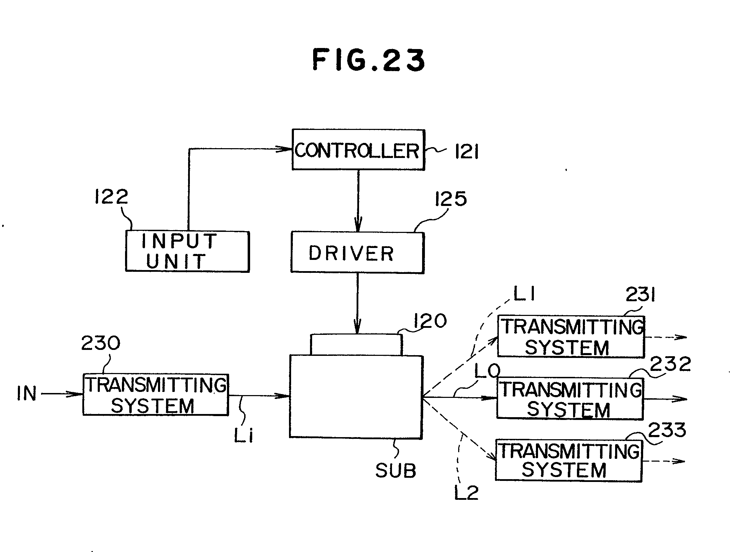

Fig. 23 shows a block diagram of a further embodiment of the optical device of the present invention.

## DETAILED DESCRIPTION OF THE PREFERRED EMBODIMENTS

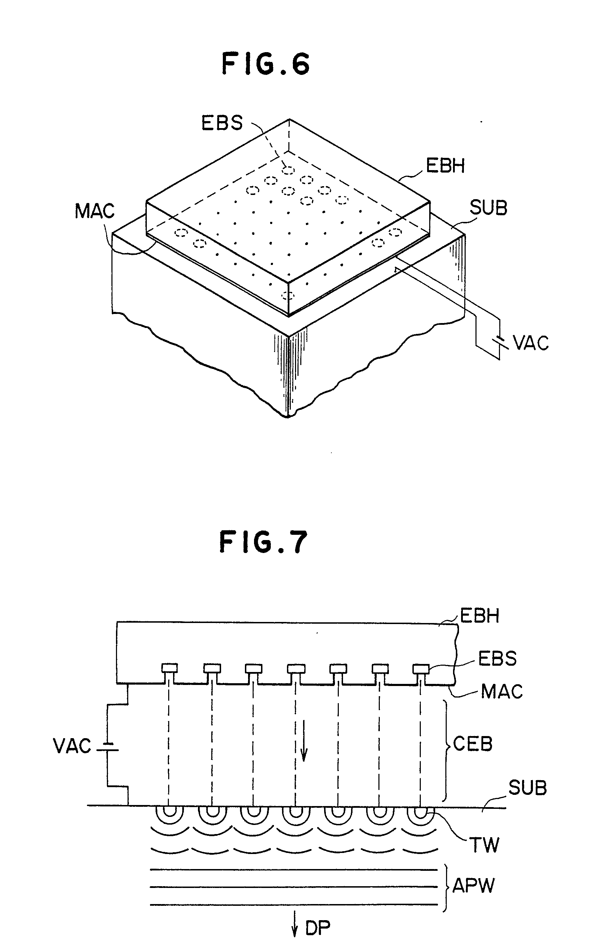

Fig. 6 shows a device for attaining the method for generating the acoustic wave in accordance with the present invention. Electron beam sources EBS are arranged two-dimensionally at a constant pitch on a bottom of solid-state electron beam generation means EBH. A substrate SUB is arranged below the generation means EBH in a spaced relation thereto, and an electrode MAC for applying an acceleration voltage is formed on the plane of the electron beam generation means EBH which faces the substrate SUB. On the other hand, the substrate SUB may be any solid-state material, and a DC acceleration voltage VAC is applied between the substrate SUB and the electrode MAC. Where the substrate SUB is an electrical insulator, a metal electrode is formed on the surface thereof for the application of the acceleration voltage VAC.

The electron beam source EBS may be that disclosed in Japanese patent examined publication 30274/I979 Japanese patent laid open application III272/I979 Japanese patent laid open application I5529/I98I Japanese patent laid open application 38528/I982. It supplies a backward voltage to a pn junction to create avalanche multiplication so that electrons are generated in a semiconductor substrate and they are emitted therefrom. The electron beam sources EBS two-dimensionally arranged on the electron beam generation means EBH can be independently driven by appropriately controlling the backward voltages applied to the respective electron beam sources EBS.

Fig. 7 shows a sectional view for illustrating an operation of the embodiment of Fig. 6. The two-dimensionally arranged electron beam sources EBS are individually controlled to generate electron beams. In Fig. 7, all of the electron beam sources EBS generate electron beams CEB of the some frequency between several KHz and several hundreds MHz, simultaneously and intermittently. The electron beams CEB intermittently generated by the respective electron beam sources are accelerated by the acceleration voltage VAC and bomburd normally to the surface of the substrate SUB to generate in the substrate SUB an ultrasonic wave having the some frequency as the intermittent frequency (radiation period) of the electron beams CEB.

A principle of generation of an ultrasonic wave in a substrate by bombardment of single electron beam is described in "Electron Beam Ultrasonic Microscope" by Ikoma and Morizuka, Applied Physics of Japan, Vol. 5I, No. 2 (I982), page 205 (95). According thereto, most portions of the energy of the electron beam accelerated and bombarded to the substrate surface are converted to a thermal energy by which a thermal wave is generated in the substrate. The thermal wave is converted to an ultrasonic wave by a thermo-elastic effect and the ultrasonic wave propagates in the substrate. The frequency of the ultrasonic wave is equal to the intermittent frequency of the electron beam. When such a single electron beam is used, a generation source of the ultrasonic wave is one point and the ultrasonic wave generated therefrom is substantially spherical wave.

In Fig. 7, since the electron beams CEB bombard the surface of the substrate SUB in the two-dimension array, thermal waves TW are also arranged two-dimensionally in a plane parallel to the surface of the substrate SUB and they form ultrasonic wave generation sources, respectively. As explained before, since all the electron beam sources EBS are simultaneously or synchronously and intermittently driven in the present embodiment, all the thermal waves TW and ultrasonic waves generated thereby are in phase. The ultrasonic waves generated in phase by the ultrasonic wave generation sources two-dimensionally arranged in the substrate SUB are superimposed each other to generate a plane wave APW which propagates in the substrate SUB in a direction DP normal to the surface of the substrate SUB.

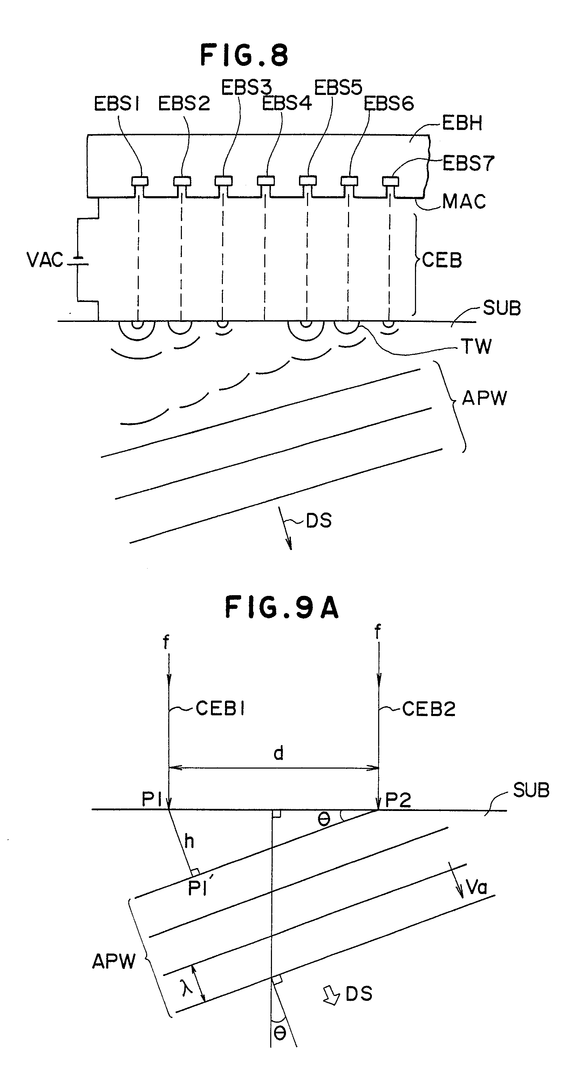

Fig. 8 shows a sectional view for illustrating another operation of the embodiment shown in Fig. 6. As described above, the electron beam sources EBS can be independently driven. By making use of this feature, the electron beams CEB are irradiated at the same intermittent frequency while sequentially giving delays to the electron beam sources EBSI, EBS2, .... The electron beams CEB bombard normally to the surface of the substrate SUB to form the ultrasonic wave generation sources as described above, but since there are delays in the electron beams CEB generated from the electron beam sources EBSI, EBS2, ..., the ultrasonic waves consisting of the spherical waves generated by the ultrasonic wave generation sources corresponding to the electron beam sources EBSI, EBS2, ... include phase retardation. Accordingly, by a principle of wavefront synthesis, different phases of those spherical waves are combined and an ultrasonic wave consisting of a plane wave APW which is propagated in the direction DS determined by the delay times of the wavefronts of the spherical waves is generated.

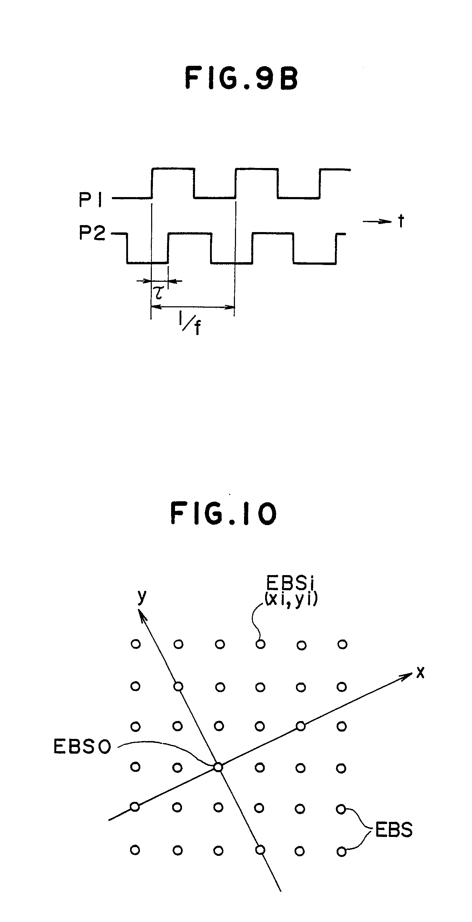

The direction DS of propagation of the plane wave APW generated in the substrate SUB is determined by the delay times of the electron beams CEB intermittently generated from the electron beam sources EBS. Figs. 9A and 9B show relationships between the delay time of the electron beam CEB and the direction DS of propagation of the plane wave in the substrate SUB. In Fig. 9A, CEBI and CEB2 denote electron beams intermittently applied to the substrate SUB, and PI and P2 denote points (positions) on the surface of the substrate SUB at which the electron beams CEBI and CEB2 are irradiated, respectively. A distance between the points PI and P2 is represented by d, an angle between the direction DS of propagation of the plane wave APW and a normal line to the surface of the substrate SUB is represented by $\theta$, a velocity of the plane wave APW in the substrate SUB is represented by Va and a wavelength of the ultrasonic wave APW is represented by $\lambda$. Fig. 9B shows the intermittent bombardment of the electron beams CEBI and CEB2 having the intermittent frequency f to the irradiation points PI and P2. At the point P2, the electron beam CEB2 is intermittently bombarded a time $\tau$ later than at the point PI.

A position in the substrate SUB reached by the plane wave APW generated at the point PI when the electron beam CEB2 reaches the point P2 is represented by PI' and a distance between the points PI and PI' is represented by h. After the time $\tau$, the plane wave APW moves by a distance $\{\tau/(1/f)\}\bullet\lambda$. A condition for the intermittent bombardments of the electron beams CEBI and CEB2 at the points PI and P2 to have the same function to the plane wave APW in the substrate SUB is:

$\{\tau/(1/f)\}\bullet\lambda = h$

Accordingly, $\tau/(1/f) = h/\lambda = d/(\lambda/\sin\theta)$

Since $f\bullet\lambda = Va$,

$\sin\theta = \tau\bullet Va/d \quad ... (1)$

In this manner, the direction DS of propagation of the plane wave APW is defined. In order to generate the ultrasonic wave APW toward a desired direction in the substrate SUB, the formula (I) is modified to

$\tau = d\bullet\sin\theta/Va \quad ... (2)$

and the generation of the electron beam CEB is delayed by the delay time $\tau$ of the formula (2).

Fig. 9A shows the sectional view taken along a plane defined by the direction DS of propagation of the ultrasonic wave APW and the normal line to the surface of the substrate SUB. It is not necessary that one of axes of the two-dimensionally arranged electron beam sources EBS is in that plane. Fig. I0 shows a plan view of the electron beam generation means EBH for illustrating the above circumstance. In Fig. I0, circles represent the two-dimensionally arranged electron beam sources EBS. A projection of the direction DS of propagation of the plane wave APW shown in Fig. 9A onto the substrate SUB is represented by an x axis, and an orthogonal direction thereto parallel to the surface of the substrate SUB is represented by a y axis. Any origin point of the electron beam generation source EBSi is selected and designated as an electron beam source EBSO. A position of the electron beam source EBSi is represented by (xi, yi). A delay time $\tau i$ of the electron beam source EBSi to the electron beam source EBSO is selected to

$\tau i = xi\bullet\sin\theta/Va \quad ... (3)$

so that the projection of the plane wave APW generated in the substrate SUB onto the surface of the substrate SUB matches to the x axis and the angle made by the normal line to the surface is equal to $\theta$. Accordingly, by appropriately selecting the x axis and setting the relative delays of the electron beam sources EBS to meet the formula (3), the plane wave APW can be generated toward any direction in the substrate SUB. Since the generation of the plane wave APW does not utilize the piezoelectricity of the substrate SUB, the ultrasonic wave such as the plane wave APW may be generated by using any substrate including a non-piezoelectric material.

In the present embodiment, the bulk wave is generated. It is also possible to generate an elastic surface wave by appropriately setting a condition. In the formula (2) or (3), by setting the delays of the electron beam sources EBS so that $\theta = 90°$ is met, the spherical waves generated from the ultrasonic wave generation sources may be combined to define a boundary condition for generating the elastic surface wave. In this case, as seen from Fig. I0, the elastic surface wave may be propagated in any direction and the elastic surface wave generation means which improves the prior art means is provided.

In the present embodiment, the electron beams CEB are intermittently irradiated to generate the ultrasonic waves. However, it is sufficient to intensity-modulate the electron beams CEB in order to generate the ultrasonic waves, and sinusoidal intensity modulation or pulse modulation of other than one-to-one duty factor may be used.

The two-dimensionally arranged electron beam sources EBS may be independently driven as shown in the present embodiment. Alternatively, the driving electrodes may be arranged in a matrix and connected to the electron beam sources EBS so that any one of the two-dimensionally arranged electron beam sources EBS is independently driven. This drive method is effective to reduce the complexity of wiring and drive when the number of electron line sources EBS is large.

Fig. II shows a plan view for explaining the matrix drive method. Common electrodes XI, X2, ..., YI, Y2, ... are arranged in a matrix and connected to the electron beam sources EBS. The electrodes XI, X2, ... are connected to a control circuit CONTI and the electrodes YI, Y2, ... are connected to a control circuit CONT2. For example, the electrode X3 is selected by the control circuit CONT I and the electrode Y4 is selected by the control circuit CONT2 so that the electron beam source EBS34 at the third column and fourth now is selected for drive.

This drive method may be combined with the generation of the ultrasonic wave by the pulse modulation of the electron beam at an appropriate duty factor. By reducing the pulse width to drive the electron beam sources EBS narrower than the relative delay time $\tau$ of the electron beam sources EBS, only one of the electron beam sources EBS is driven at any one time.

In the present embodiment, the electron beam generator shown in Japanese patent examined publication 30274/1979 is used although it is not essential in the present method of generating the ultrasonic wave so long as the electron beam generation means are independently driven. Accordingly, pn junction negative work function type or field emission type solid state electron beam source may be used as the electron beam source of the present invention. In the present embodiment, the two dimentionally arranged electron beam sources spaced at the constant pitch are used, but they need not be arranged at the constant pitch.

In the method for generating the acoustic wave in accordance with the present invention, the ultrasonic wave is generated by irradiating the electron beams which are generated by the two-dimensionally arranged and individually controllable electron beam sources to the substrate made of the medium capable of transmitting the acoustic wave. Thus, the ultrasonic wave may be generated by using the non-piezoelectric substrate, and the bulk wave and elastic surface wave can be selectively generated from the same generation source. Since the generation source does not have a frequency characteristic which depends on the shape, it can generate a wide frequency range of ultrasonic wave of several KHz to several hundreds MHz. Thus, various functions may be attained by one ultrasonic wave generation means.

Fig. l2 shows a block diagram of one embodiment of an acoustic wave generation device which uses the present method.

In Fig. l2, EBH denotes electron beam generation means, CEB denotes electron beams, and SUB denotes a substrate made of a medium capable of transmitting an acoustic wave. Those have been explained in the previous embodiment.

Numeral l2l denotes a controller for controlling the electron beam irradiation by the electron beam generation means, numeral l22 denotes input means for inputting a command signal to the controller l2l, and numeral l23 denotes an electric field generator for generating an electric field to accelerate the electron beams.

The controller l2l individually controls the electron beam sources of the electron beam generation means EBH to change the intensity, generation or irradiation timing (period) of the electron beams generated by the electron beam sources.

The generator l23 also can change the electric field intensity (acceleration voltage) for accelerating the electron beam in accordance with the signal from the controller l2l. As a result, the energies of the electron beams CEB applied to the substrate SUB can be changed and the amplitude of the acoustic wave generated in the substrate SUB can be changed. Alternatively, the intensity of the electron beams generated by the electron beam sources may be changed by the controller l2l to control the energies of the electron beams CEB.

The controller l2l controls the generation of the electron beams by the electron beam sources of the electron beam generation means EBH in accordance with a command signal from the input device l22. The electron beam generation means EBH irradiates the electron beams CEB to the substrate SUB in accordance with a sequence preset in the controller l2l.

In the substrate SUB, acoustic waves are generated in accordance with the irradiation status of the electron beams, and the acoustic waves having the ultrasonic wave sources at the positions on the substrate SUB to which the electron beams are bombarded are combined to form an acoustic wave having a predetermined wavefront, which acoustic wave propagates in the substrate SUB.

A sequence to generate the bulk wave described above and a sequence to generate an elastic surface wave to be described later are programmed and stored in a memory of the controller l2l, and one of the two sequences is selected by the input device l22 so that the bulk wave or elastic surface wave is selectively generated in the substrate SUB in accordance with the state of the substrate SUB.

In the previous embodiment, a plurality of electron beam sources are two-dimensionally arranged to form the electron beam generation means EBH. In the present embodiment, such matrix electron beam source array may also be used so that the ultrasonic wave or elastic surface wave may be propagated in any direction in the substrate SUB. The direction of propagation may also be controlled by the controller 121.

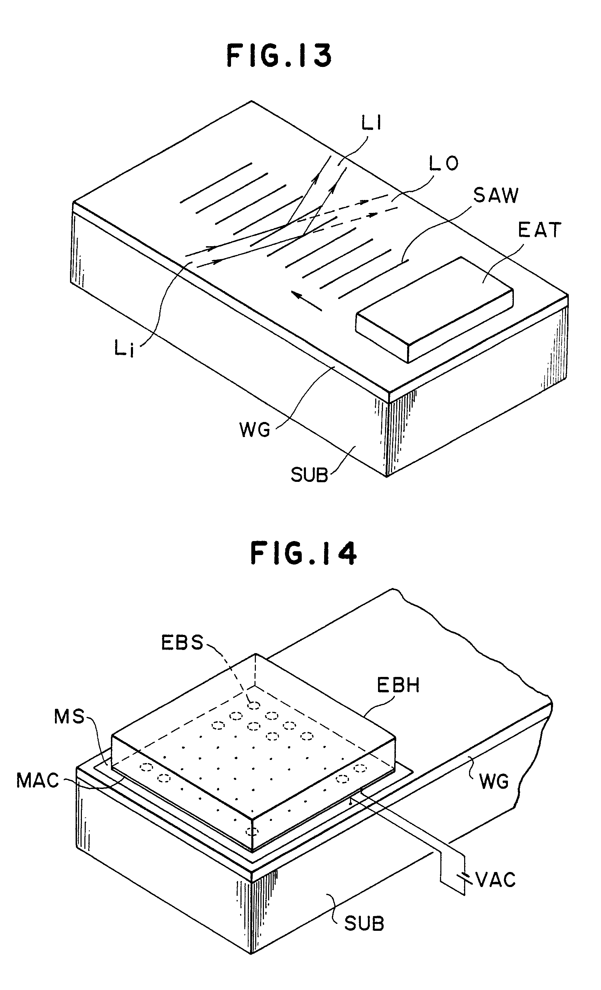

Fig. 13 shows an embodiment of the optical device of the present invention. It shows an elastic surface wave light deflector. A thin film optical wave guide WG is formed on a substrate SUB, and an ultrasonic wave transducer EAT for generating an elastic surface wave by using an electron beam generation device is arranged on the optical wave guide WG. The optical wave guide WG is made of a material which is same as that used in the prior art device and which is capable of transmitting elastic wave and light. The elastic surface wave SAW generated in the optical wave guide WG by the ultrasonic transducer EAT crosses a laser beam Li which propagates in the optical wave guide WG. The elastic surface wave SAW functions as a diffraction grating to cause a Bragg's diffraction in the loser beam Li.

The ultrasonic transducer EAT used in the present invention can excite the elastic surface wave of a very wide frequency band, and can excite the elastic surface wave SAW which propagates in any direction. Figs. 14 to 16B illustrate operations of the ultrasonic transducer EAT. A method for generating the elastic surface wave SAW is explained with reference to those drawings. Fig. 14 shows the ultrasonic transducer EAT which uses the electron beam generation device. A plurality of electron beam sources EBS are two-dimensionally arranged at a constant pitch on a bottom of the solid-state electron beam generation device EBH. A substrate SUB is arranged to face the solid-state electron beam generation device EBH, and an acceleration voltage VAC is applied across the solid-state electron beam generation device EBH and the substrate SUB. An electrode MAC for applying the acceleration voltage VAC is arranged on the surface of the electron beam generation device EBH which faces the substrate SUB. On the other hand, an optical wave guide WG is formed on the surface of the substrate SUB. Since the optical wave guide WG is usually of an electrically insulative material, an electrode MS is formed thereon. The acceleration voltage VAC is applied across the electrodes MAC and MS.

The electron beam source EBS may be one of various sources including avalanche multiplication type, negative work function type and field emission type.

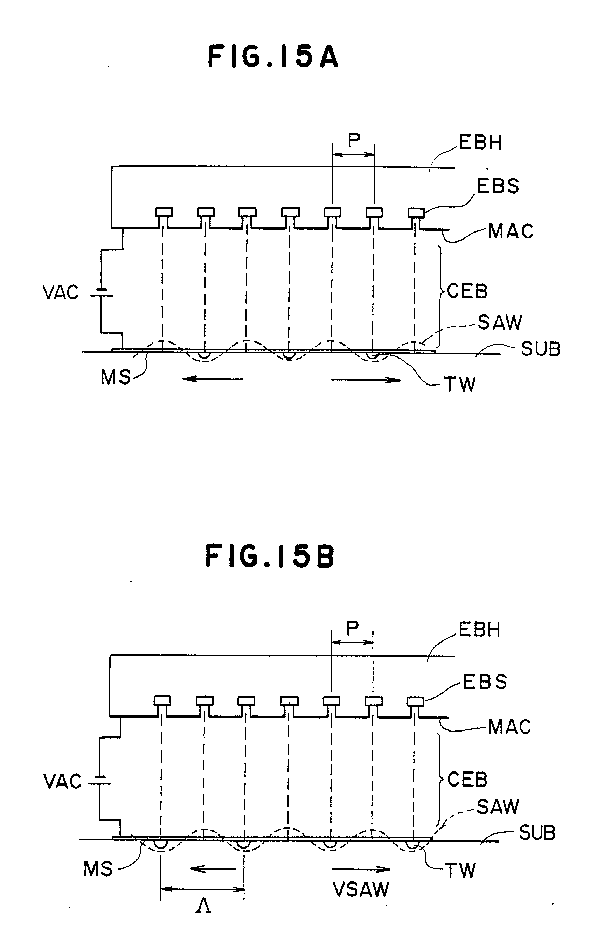

Figs. 15A and 15B illustrate an operation of the ultrasonic transducer shown in Fig. 14. As described above, the electron beam sources EBS which are two-dimensionally arranged in the electron beam generation device EBH can be independently driven. In the present embodiment, this feature is utilized to excite the elastic surface wave. In Figs. 15A and 15B, a distance between adjacent electron beam sources EBS is represented by p, a velocity of the elastic surface wave which propagates in the substrate SUB is represented by Vsaw, and a wavelength thereof is represented by $\Lambda$. If the adjacent electron beam sources EBS are alternately switched at a frequency f and relations of

$$2p = \Lambda$$
$$Vsaw = f \bullet \Lambda$$

are met, a thermal wave TW generated by the bombardment to the substrate SUB of the electron beams CEB alternately generated from the adjacent electron beam sources EBS meets a boundary condition of the elastic surface wave and it is converted to an ultrasonic wave so that the elastic surface wave SAW is excited.

In Figs. 15A and 15B, it is assumed that the pitch p of the electron beam sources EBS corresponds to one half of the wavelength of the elastic surface wave SAW and the adjacent electron beam sources EBS alternately generate the electron beams CEB. The generation of the elastic surface wave SAW under a general condition is now explained. Fig. 16A shows a sectional view taken along a plane containing the direction of propagation of the elastic surface wave SAW and the normal line to the surface of the substrate SUB. CEB1 and CEB2 denote the electron beams switched in that plane, and P1 and P2 denote points on the substrate SUB to which the electron beams CEB1 and CEB2 are irradiated. A distance between the points P1 and P2 is represented by d, a velocity of the ultrasonic wave is represented by Vsaw and the wavelength thereof is represented by $\Lambda$.

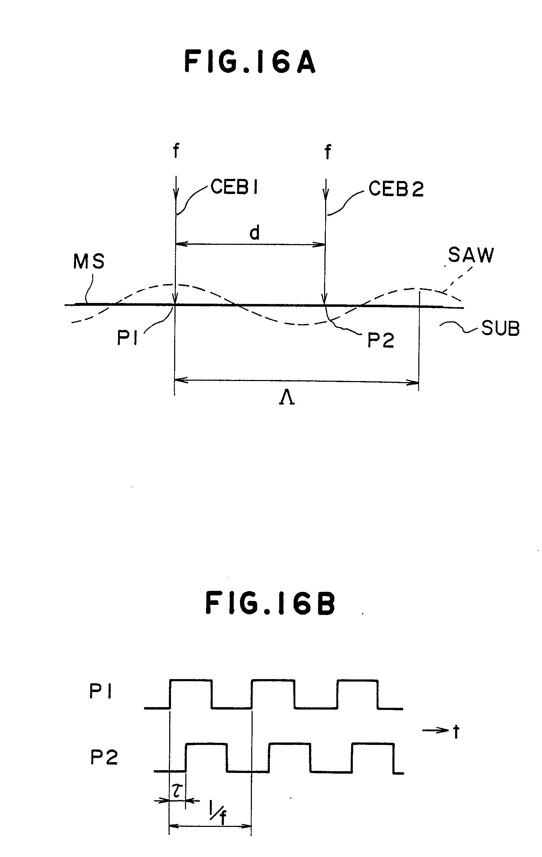

Fig. 16B shows switching of the electron beams CEB irradiated to the points P1 and P2. At the point P2, the electron beam is switched a time $\tau$ later than at the point P1. The switching frequency is f. Since a condition for the switching of the electron beams CEB at the points P1 and P2 to have the same function to the elastic surface wave in the substrate SUB is given by

$$\tau/(1/f) = d/\Lambda$$

and since $f \bullet \Lambda = Vsaw$, the following formula is derived.

$$\tau = d/Vsaw$$

Thus, by driving the two electron beam sources EBS separated by the distance d along the direction of propagation of the elastic surface wave SAW, with the delay of $\tau = d/Vsaw$ therebetween, the elastic surface wave SAW can be generated.

As described above, Figs. 16A and 16B show sectional views taken along the plane containing the direction of propagation of the elastic surface wave SAW and the normal line to the surface of the substrate SUB. It is not necessary that one of axes of the two-dimensionally arranged electron beam sources EBS is in that plane. Fig. I7 shows a plan view of the electron beam generation device EBH for explaining such a circumstance. In Fig. I7, circles show the two-dimensionally arranged electron beam sources EBS, the direction of propagation of the elastic surface wave SAW is represented by an x axis, the orthogonal direction is represented by a y axis, and any selected electron beam source EBSO is defined as an origin point. A position of an electron beam source EBSi is represented by (xi, yi) and a delay time $\tau$i of the drive of the electron beam source EBSi relative to the drive of the origin point electron beam source EBSO is selected to

$$\tau i = x/Vsaw$$

Thus, the elastic surface wave SAW which propagates in the x axis is excited.

Accordingly, by appropriately selecting the x axis and setting the delay time r of the drive of the electron beam sources EBS to meet the above formula, the elastic surface wave SAW can be excited in any direction in the substrate SUB.

The ultrasonic transducer EAT used in the present invention can generate the elastic surface wave SAW of a desired frequency in any direction in the substrate SUB. The elastic surface wave light deflector of the present invention makes use of this feature to deflect the incident light over a wide angle. The operation is explained with reference to Figs. I8A and I8B, which show that the embodiment of Fig. I3 can generate the elastic surface wave SAW which always meets the Bragg's condition. In Fig. I8A, the laser beam Li is deflected by the elastic surface wave of a higher frequency. In this case, since the wavelength $\Lambda$ of the elastic surface wave SAW is short, the incident angle $\theta$ of the laser beam Li must be large in order to meet the Bragg's condition. By generating the elastic surface wave SAW so that it propagates toward the incident point of the laser beam Li, the angle between the wavefront of the elastic surface wave SAW and the incident laser beam Li can meet the Bragg's condition.

In Fig. I8B, the laser beam is deflected by the elastic surface wave SAW of a lower frequency. In this case, since the wavelength $\Lambda$ of the elastic surface wave SAW is long, the incident angle $\theta$ of the laser beam Li must be small in order to meet the Bragg's condition. By generating the elastic surface wave SAW so that it propagates oppositely to the incident point of the laser beam Li, the angle between the wavefront of the elastic surface wave SAW and the incident laser beam Li can meet the Bragg's angle.

In the prior art device explained before, the angle $\theta$ between the wavefront of the elastic surface wave SAW and the incident laser beam Li is fixed and the Bragg's condition is met by only one frequency point, and the diffraction efficiency is low at other frequency. In the present invention, as explained in Figs. I8A and I8B, the light is deflected while the Bragg's condition is always met. Further, since the ultrasonic transducer EAT used in the present invention has no limitation on the frequency band due to its shape, the Bragg diffraction is attained over a wide band and a wide range of deflection angle is attained.

In the present embodiment, the electron beams are switched to generate the elastic surface waves. However, it is sufficient that the electron beams are intensity-modulated in order to generate the ultrasonic wave, and sinusoidal intensity modulation or pulse modulation with other than one-to-one duty factor may be used.

The two-dimensionally arranged electron beams EBS can be independently driven in the present embodiment. Alternatively, the drive electrodes may be arranged in a matrix to independently drive one of the electron beam sources EBS. This drive method is effective to reduce the complexity of wiring and drive when the number of electron beam sources EBS is large.

The elastic surface wave light deflector of the present embodiment deflects the light beam in the optical wave guide substrate by the elastic surface wave generated by irradiating to the optical wave guide substrate the electron beams generated by the two-dimensionally arranged and individually controllable electron beam sources so that the diffraction is attained while the Bragg's condition is always met over a wide frequency range and the light deflection with a wide angle range is attained at a high diffraction efficiency.

Fig. I9 show other embodiment of the optical device of the present invention. It shows a bulk wave light deflector. An ultrasonic transducer EAT which uses an electron beam generation device is arranged on a medium SUB which may be a crystal having an acousto-optical characteristic and which is capable of transmitting light and acoustic wave, and an incident light Li is applied to the medium SUB. A wavefront of an ultrasonic wave APW generated in the medium SUB by the ultrasonic transducer EAT propagates in the medium SUB in a direction DA. The wavefront of the ultrasonic wave APW functions as a diffraction grating to the incident light Li to cause a Brogg's diffraction. As a result, a portion of the incident light Li becomes LI and the remainder becomes a non-diffraction light LO which exits out of the medium SUB. The ultrasonic transducer EAT can control the direction of the wavefront of the generated ultrasonic wave APW and it has no limitation on the frequency band due to the shape of the transducer.

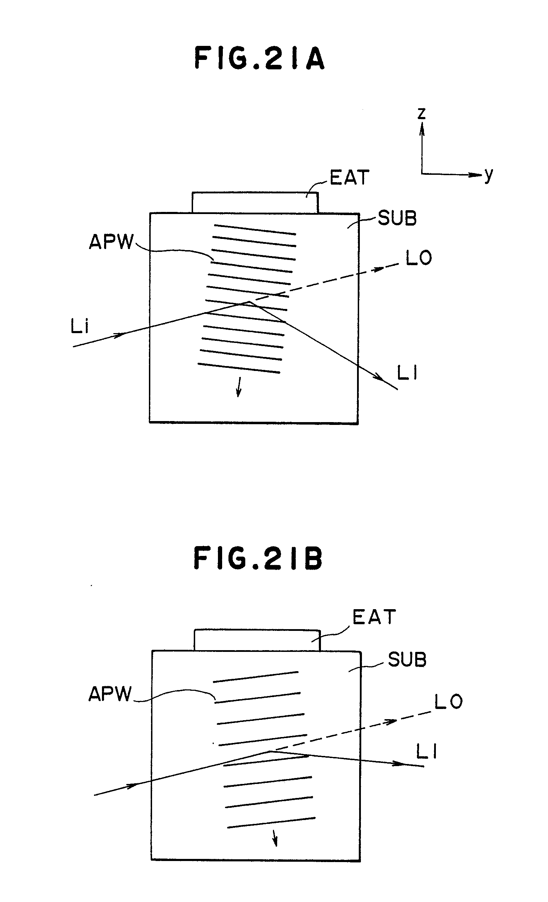

Figs. 20 to 22A, 22B illustrate operations of the ultrasonic transducer EAT. Fig. 20 shows the ultrasonic transducer which uses the electron beam generation device. The electron beam sources EBS are two-dimensionally arranged at a constant pitch on a bottom of the solid-state electron beam generation device EBH. The substrate SUB is arranged to face the solid-state electron beam generation device EBH, and an electrode MAC for applying an acceleration voltage is formed on the surface of the electron beam generation device EBH which faces the substrate SUB. On the other hand, the substrate SUB may be of any solid material, and a D.C. acceleration voltage VAC is applied across the substrate SUB and the electrode MAC. If the substrate SUB is an electrically insulative material, a metal electrode is formed thereon and the voltage VAC is applied thereto.

The function of the ultrasonic transducer EBH shown in Fig. 20 is same as that explained in Figs. 6 to l0 and hence the explanation thereof is omitted.

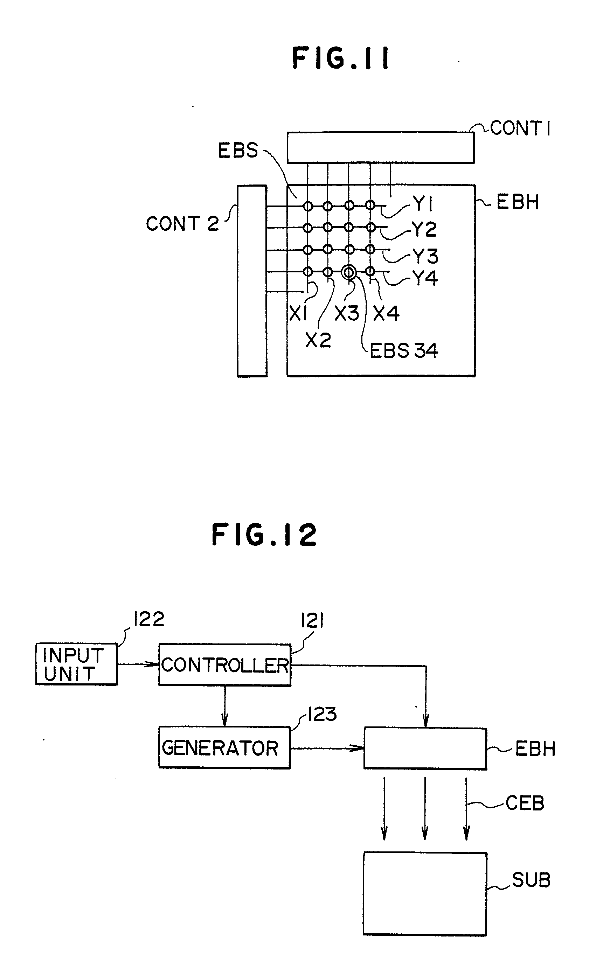

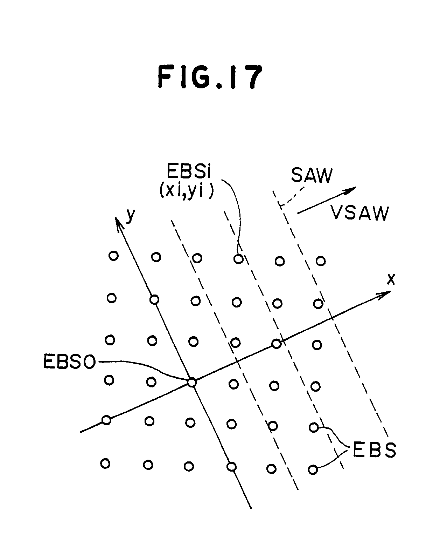

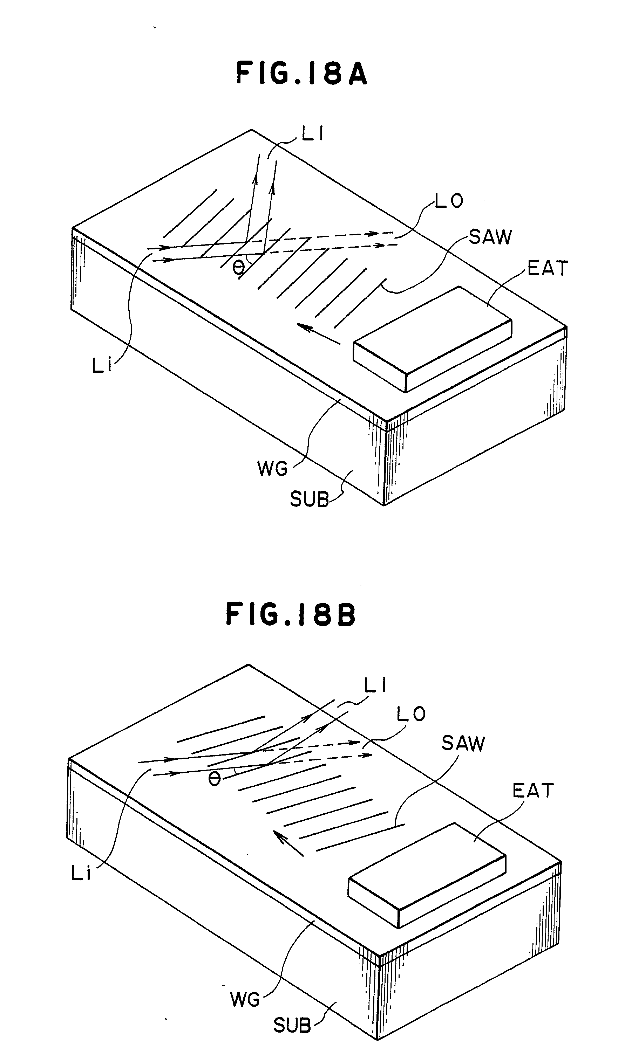

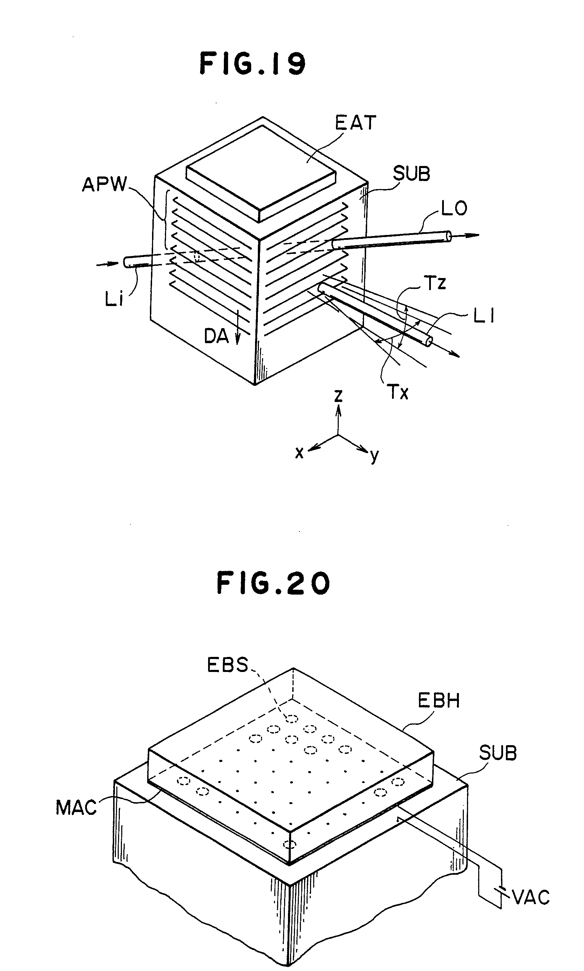

The ultrasonic transducer EAT used in the present invention can generate the ultrasonic wave APW of any frequency in any direction in the substrate SUB. By utilizing the feature, the acousto-optical device of the present invention can two-dimensionally deflect the incident light Li over a wide range of angle. This is explained with reference to Figs. 2lA to 22B. Figs. 2lA and 2lB show that the ultrasonic wave is generated in the embodiment of Fig. l9 to always meet the Bragg's condition. In Fig. 2lA, the incident light Li is deflected by the plane wave APW of a higher frequency. In this case, since the wavelength $\Lambda$ of the plane wave APW is short, the incident angle $\theta$ of the incident light Li must be large in order to meet the Bragg's condition. By generating the plane wave APW so that it propagates toward the incident point of the incident light Li relative to the normal line to the surface of the substrate SUB, the angle between the wavefront of the ultrasonic wave APW and the incident light Li can meet the Bragg's condition.

In Fig. 2lB, the laser beam is deflected by the plane wave APE of a lower frequency. In this case, since the wavelength $\Lambda$ of the plane wave APW is long, the incident angle $\theta$ of the incident light Li must be small in order to meet the Bragg's condition. By generating the ultrasonic wave APW so that it propagate oppositely to the incident point of the incident light Li, the angle $\theta$ between the wavefront of the ultrasonic wave APW and the incident light Li can meet the Bragg's condition.

In the prior art device, the angle between the wavefront of the ultrasonic wave APW and the incident light Li is fixed and the Bragg's condition is met at only one frequency point and the diffraction efficiency is low at other frequencies. In the present invention, as explained in Figs. 2lA and 2lB, the light is deflected while the Bragg's condition is always met. Further, since the ultrasonic transducer EAT used in the present invention has no limitation on the frequency band due to the shape of the transducer, the Bragg diffraction is attained over or wide range of frequency and a wide range of deflection angle is attained.

Figs. 22A and 22B show that the acousto-optical device of the present invention can attain the two-dimensional deflection compared to the one-directional deflection attained in the prior art device. As seen from Figs. 22A and 22B, by inclining the wavefront of the ultrasonic wave comprising the plane wave APW orthogonally to the incident light Li, the incident light Li is also deflected orthogonally to the direction of deflection by the change of frequency of the plane wave APW, and the two-dimensional deflection is attained by combining those two deflections of different directions.

In the present embodiment, the intensity modulation of the electron beam is sufficient in order to generate the plane wave by switching the electron beam, and it may be attained by sinusoidal intensity modulation or pulse modulation with other than one-to-one duty factor.

The two-dimensionally arranged electron beam sources EBS are independently driven in the present embodiment. Alternatively, as shown in Fig. ll, the drive electrodes may be arranged in matrix and connected to the electron beam sources EBS so that any one of the two-dimensionally arranged electron beam sources EBS is independently driven. This drive method is effective to reduce the complexity of wiring and drive when the number of electron beam sources EBS is large.

In the acousto-optical device of the present embodiment, the incident light is deflected by the ultrasonic wave generated by irradiating to the medium having the acousto-optical effect the electron beams generated by the two-dimensionally arranged and individually controllable electron beam sources so that a wide angle range of light deflection is attained. By controlling the wavefront of the ultrasonic wave, the deflection orthogonal to the deflection attained by the frequency change of the ultrasonic wave is attained and the two-dimensional light deflection is attained.

Fig. 23 shows a block diagram of a further embodiment of the optical device of the present invention.

In Fig. 23, numeral l20 denote radiation means including a plurality of radiation sources for radiating radiation energies such as electron beams, numeral l25 denotes a driver for controlling the radiation of the electron beams from the radiation means l20, and numerals l2l and l22 denote controller and input device, respectively, having the same functions as those of the embodiment of Fig. l2. SUB denotes a substrate similar to those of the previous embodiments, which is made of a medium which is transparent to an incident light and capable of transmitting an acoustic (elastic) wave.

On the other hand, numerals 230, 231, 232 and 233 denote light transmission systems for transmitting light beams such as laser beams and they comprise various optical members. The transmission system 230 directs the laser beam Li to the substrate SUB, and the transmission systems 23l, 232 and 233 receive a laser beam L0 which has passed through the substrate SUB and laser beams Ll and L2 deflected in the substrate SUB and transmit them to predetermined directions.

The laser beam Li is deflected in the substrate SUB by the ultrasonic wave deflection device comprising the substrate SUB, radiation means l20, driver l25, controller l2l and input device l22.

The controller l2l responds to a command from the input device l22 by supplying a control signal to the driver l25. The driver l25 drives the radiation means l20 in accordance with the control signal to generate the ultrasonic wave comprising elastic surface wave or bulk wave in the substrate SUB in the method described in the previous embodiment. The ultrasonic wave which is a combination of a plurality of spherical waves propagates in the substrate SUB while crossing the path of the laser beam Li in the substrate SUB.

The laser beam Li is deflected in accordance with the direction of propagation or frequency of the plane wave in the substrate SUB and exits from the substrate SUB as the laser beam Ll or L2. When the laser beam Li is not deflected in the substrate SUB but goes straight, it exits from the substrate SUB as the laser beam L0. The laser beams L0, Ll and L2 can be simultaneously exited from the substrate SUB by appropriately controlling the direction of propagation or frequency of the plane wave in the substrate SUB. Accordingly, the present invention allows not only the deflection of the laser beam but also the splitting of the laser beam.

When light beams of different wavelengths are directed to the substrate SUB in place of the laser beams Li, it is possible to deflect only a selected wavelength light beam to a predetermined direction. It is also possible to direct the light beams of different wavelengths to different directions.

A laser beam from a laser source, not shown, is directed to the transmission system 230. It is directed continuously or in synchronism with the electron beam radiation to the substrate SUB. In the latter case, the input of the laser beam may be controlled by the controller 2l.

Photo-sensors may be arranged in the paths of the laser beams transmitted by the transmission systems 23l - 233 so that the light signals are converted to electrical signals. This allows an application to a light communication field.

In the embodiments described above, the method for generating the ultrasonic wave (elastic wave comprising the plane wave has been described, although the present invention is not limited to the ultrasonic wave comprising the plane wave but it can generates ultrasonic waves having other wavefronts.

The method for generating the acoustic wave of the present invention is applicable to not only the light field but also various other fields.

## Claims

l. A method for generating an acoustic wave by radiation energies, comprising the steps of:

preparing a substrate capable of transmitting the acoustic wave; and

periodically applying the radiation energies at different positions on said substrate.

2. A method for generating an acoustic wave according to Claim l, wherein said raddiation energies are in the form of electron beams and said application step includes substeps of arranging a plurality of electron beam sources and intermittently generating the electron beams by said electron beam sources.

3. A method for generating an acoustic wave according to Claim 2, wherein said plurality of electron beam sources include first electron beam source group and second electron beam source group alternately arranged along the direction of array, and said first group and second group generate the electron beams at different timings.

4. A method for generating an acoustic wave according to Claim l, wherein a plurality of spherical waves are generated after said application step, and a plane wave is generated by said spherical waves.

5. A method for generating an acoustic wave according to Claim l, wherein a plurality of spherical waves are generated after said application step, and an elastic surface waves is generated by said spherical waves.

6. An acoustic wave generator comprising:

a substrate for transmitting an acoustic wave;

means for supplying a plurality of independent radiation energies;

means for directing said radiation energies to different positions on said substrate; and

means for controlling the supply of said radiation energies.

7. An optical device for generating an acoustic wave by radiation energies and controlling a light by the generated acoustic wave, comprising:

a substrate capable of transmitting the light and the acoustic wave; and

generation means for applying said radiation energies to said substrate to generate an elastic wave in said substrate,

whereby the light propagating in said substrate is deflected by said elastic wave.

8. An optical device according to Claim 7, wherein said generation means includes means for supplying a plurality of independent radiation energies and means for controlling intensities of said radiation energies.

9. An optical device according to Claim 7, wherein said generation means includes means for supplying a plurality of independent radiation energies and means for individually controlling the supply of said radiation energies.

10. An optical device according to Claim 7, wherein said radiation energies are in the form of electron beams and said generation means includes a plurality of electron beam sources and means for individually controlling generation of electron beams from said electron beam sources.

11. An optical device according to Claim 10 further comprising means for accelerating the electron beams generated by said electron beam sources toward said substrate.

12. An optical device according to Claim 7, wherein said elastic wave is a bulk wave.

13. An optical device according to Claim 12, wherein said bulk wave is a plane wave.

14. An optical device according to Claim 7, wherein said substrate includes a thin film optical wave guide.

15. An optical device according to. Claim 14, wherein said elastic wave is an elastic surface wave and generated in said optical wave guide.

16. An optical device according to Claim 7 further comprising means for directing the light to said substrate.

17. An optical device according to Claim 16 further comprising a plurality of means for selectively receiving the lights emitted from said substrate in different directions.

18. An optical device according to Claim 16 further comprising means for selectively receiving the light deflected by said elastic wave.

# FIG.1

# FIG.2

# FIG.3

# FIG.4

## FIG.5A

## FIG.5B

# FIG.6

# FIG.7

# FIG.8

EBS1 EBS2 EBS3 EBS4 EBS5 EBS6 EBH

EBS7

MAC

VAC

CEB

SUB

TW

APW

DS

# FIG.9A

f       f

CEB1       CEB2

d

P1       P2       SUB

θ

h

P1'

Va

APW

λ

DS

θ

# FIG.9B

# FIG.10

# FIG.11

# FIG.12

# FIG.13

LI

LO

SAW

EAT

Li

WG

SUB

# FIG.14

EBS

EBH

MS

MAC

WG

VAC

SUB

## FIG.15A

## FIG.15B

# FIG.16A

# FIG.16B

# FIG.17

# FIG.18A

# FIG.18B

# FIG.19

# FIG.20

# FIG.21A

# FIG.21B

# FIG.22A

# FIG.22B

# FIG.23

## DOCUMENTS CONSIDERED TO BE RELEVANT

EP 87111828.7

| Category | Citation of document with indication. where appropriate, of relevant passages | Relevant to claim | CLASSIFICATION OF THE APPLICATION (Int. Cl.4) |
|---|---|---|---|
| X | <u>DE - C2 - 2 732 855</u> (IBM) <br> * Claims 1,5,6,11,12,13,14,15, 20-24; column 3, line 68 - column 4, line 22; column 7, line 34 - column 8, line 14; fig. 1A-1C,6,9,10 * | 1,4 | G 02 F 1/33 <br> G 10 K 15/00 <br> H 01 J 37/30 <br> G 02 B 6/12 |
| Y | | 2,3,6 | |
| A | | 5,7,10, 12,13 | |
| | -- | | |
| X | <u>US - A - 3 532 181</u> (A.J. DEMARIA et al.) <br> * Totality; especially column 2, lines 18-31, 58-70 * | 1 | |
| A | | 4-6,8, 12,13 | |
| | -- | | **TECHNICAL FIELDS SEARCHED (Int. Cl.4)** |
| Y | <u>US - A - 4 259 678</u> (VAN GORKOM et al.) <br> * Abstract; column 11, line 36 - column 13, line 15; fig. 26-31 * | 2,3,6 | G 02 F <br> G 10 K <br> H 01 J |
| A | | 9-11 | G 02 B <br> B 06 B |
| | -- | | H 03 H |
| A | <u>US - A - 4 348 075</u> (GOTTLIEB et al.) <br> * Abstract; column 1, line 24 - column 2, line 40; fig. 1-4 * | 7,12, 14-18 | |
| | -- | | |

The present search report has been drawn up for all claims

| Place of search <br> VIENNA | Date of completion of the search <br> 24-11-1987 | Examiner <br> GRONAU |
|---|---|---|

European Patent
Office

# EUROPEAN SEARCH REPORT

Application number

| DOCUMENTS CONSIDERED TO BE RELEVANT | EP 87111828.7 |
|---|---|

| Category | Citation of document with indication. where appropriate, of relevant passages | Relevant to claim | CLASSIFICATION OF THE APPLICATION (Int. Cl 4) |
|---|---|---|---|
| A | L. LEVI "Applied Optics, A Guide to Optical System Design", vol. 2, 1980 <br><br> JOHN WILEY & SONS, New York <br> pages 275-282 <br><br> * Chapters 14.2.4.1, 14.2.4.2, 14.2.4.3 * <br><br> -- | 7,12 | |
| A | H.J. EICHLER et al. "Laser-induced Dynamic Gratings", Springer Series in Optical Sciences, vol. 50, 1986 <br><br> SPRINGER-VERLAG, Berlin, Heidelberg <br> pages 140-143 <br><br> * Chapter 5.3 * <br><br> ---- | 1,6,7 | |
| | | | TECHNICAL FIELDS SEARCHED (Int. Cl.4) |

The present search report has been drawn up for all claims

| Place of search <br> VIENNA | Date of completion of the search <br> 24-11-1987 | Examiner <br> GRONAU |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82